# FASCICULE DE BREVET EUROPEEN

(11) **EP 2 613 444 B1**
(45) Date de publication et mention de la délivrance du brevet: **30.04.2014**
(21) Numéro de dépôt: 12195671.8
(22) Date de dépôt: 05.12.2012
(51) Int. Cl.: H04B 1/08

(54) **Appareil électronique audio/vidéo, notamment autoradio multimédia, à façade amovible.**
Audiovisual electronic device, in particular a multimedia car radio, with removable front panel
Elektronisches Audio-/Videogerät, insbesondere Multimedia-Autoradio mit abnehmbarer Bedienkonsole

(30) Priorité: 05.01.2012 FR 1250116
(43) Date de publication de la demande: 10.07.2013
(73) Titulaire: Parrot, 75010 Paris (FR)
(72) Inventeur: Sanlaville, Thierry, 75015 PARIS (FR)
(74) Mandataire: Dupuis-Latour, Dominique

(56) Documents cités:
- EP-A1- 2 184 860
- EP-A2- 1 950 094
- DE-C1- 19 825 790

## Description

L'invention concerne les appareils électroniques audio/vidéo comportant un boîtier muni d'un élément, tel qu'une façade, monté de manière amovible sur le boîtier.

Elle s'applique plus particulièrement aux autoradios dont le boîtier est intégré à demeure dans le tableau de bord du véhicule automobile, et qui sont pourvus d'une façade antivol amovible portant notamment divers boutons de commande permettant de rendre opérationnel l'autoradio lorsque la façade est emboîtée sur l'appareil. La façade peut également permettre de découvrir une fente d'insertion d'une carte mémoire, d'un disque compact, etc.

L'application aux autoradios, si elle est particulièrement avantageuse, n'est toutefois pas limitative de l'invention qui, comme on le comprendra, peut être appliquée à de très nombreux types d'autres appareils électroniques.

Le EP 2 184 860 A1 (Parrot) décrit un autoradio comportant une façade complètement amovible. Le EP 2 329 990 A1 (Parrot) décrit un autre exemple d'autoradio avec une façade partiellement amovible (demi-façade latérale), correspondant au modèle commercialisé sous la dénomination *PARROT ASTEROID* (marque déposée) par Parrot SA, Paris, France.

De façon générale, dans la suite de la description, on utilisera le terme de "façade" pour désigner indifféremment une façade totalement amovible, ou seulement un élément amovible de façade ne s'étendant que sur une fraction plus ou moins réduite de la surface frontale de l'appareil. L'invention concerne plus précisément le montage/démontage d'une façade amovible.

La mise en place de la façade se fait en plaquant celle-ci contre la paroi frontale du boîtier, puis en la verrouillant à ce dernier par encliquetage au moyen d'un système approprié, par exemple un système à griffe ou à crochets pouvant être libéré par appui sur un bouton placé sur le côté de la façade.

La façade est généralement réalisée à la manière d'un volet, avec à l'une de ses extrémités un verrou, généralement un verrou mécanique avec un bouton ou une tirette commandant le système à griffe ou à crochets, qui permet de désolidariser la façade et de la basculer pour pouvoir la saisir et la retirer. Du côté opposé, la façade est articulée au boîtier par une charnière démontable, qui peut être soit une charnière formée d'éléments emboîtables purement mécaniques, soit une charnière magnétique mettant en oeuvre un couple d'aimants, montés sur la paroi arrière de la façade et sur la paroi avant du boîtier, et disposés en vis-à-vis et en relation d'attraction mutuelle pour coupler la façade au boîtier avec un degré de liberté en pivotement. Une telle charnière magnétique démontable est décrite par exemple dans le EP 2 184 860 A1 précité.

La mise en place de la façade sur le boîtier exige cependant parfois un peu de doigté de la part de l'utilisateur, alors même que, selon l'endroit où l'autoradio est placé sur le tableau de bord, les conditions de manipulation ne sont pas toujours idéales. En outre, il est important de bien positionner la façade au moment de sa mise en place, afin que celle-ci puisse être correctement accouplée au boîtier.

Enfin, un tel système doit être suffisamment robuste pour pouvoir tolérer les fausses manoeuvres et les imprécisions de mise en place.

De façon générale, il est souhaitable de permettre un enlèvement et une mise en place de la façade amovible de la façon la plus ergonomique possible, et avec des moyens mécaniques les plus simples, en évitant de recourir à des ressorts, lames d'éjection, etc.

Pour résoudre ces problèmes, l'invention propose un appareil du type divulgué par le EP 2 184 860 A1 précité, c'est-à-dire comportant ; un boîtier, notamment un boîtier intégrable dans un tableau de bord de véhicule automobile ; un élément de façade, monté de manière amovible sur le boîtier ; et des moyens mécaniques d'assemblage et de fixation réversible de l'élément de façade sur le boîtier. Ces moyens comportent : à une première extrémité de l'élément de façade et du boîtier, une charnière magnétique démontable comprenant une première paire d'éléments magnétiques, disposés respectivement sur le boîtier et sur l'élément de façade, en vis-à-vis et en relation d'attraction mutuelle ; et à une seconde extrémité, opposée, de l'élément de façade et du boîtier, des moyens de verrouillage de l'élément de façade au boîtier.

De façon caractéristique de l'invention, les moyens de verrouillage de l'élément de façade au boîtier comprennent : un verrou ; et une seconde paire d'éléments magnétiques, disposés respectivement sur le boîtier et sur l'élément de façade, en vis-à-vis et en relation de répulsion mutuelle. En particulier, l'élément de façade est mobile par rapport au boîtier entre : une position fermée, où l'élément de façade est maintenu solidaire du boîtier par blocage du verrou ; une position entrouverte, où l'élément de façade est désolidarisé du boîtier au niveau du verrou après déblocage de celui-ci, mais reste couplé au boîtier au niveau de la charnière magnétique, les éléments magnétiques de la première paire étant accolés l'un à l'autre et les éléments magnétiques de la seconde paire étant à distance l'un de l'autre ; et une position de retrait de l'élément de façade, où celui-ci est entièrement désolidarisé et découplé du boîtier à la fois au niveau du verrou et au niveau de la charnière magnétique.

La force d'attraction des éléments magnétiques de la première paire, la force de répulsion des éléments magnétiques de la seconde paire, ainsi que la masse et la disposition de l'élément de façade sont alors choisis de manière que la position entrouverte soit une position statique stable en l'absence de sollicitation extérieure.

Selon diverses caractéristiques subsidiaires avantageuses :
- le verrou est un verrou mécanique ;
- les moyens de verrouillage de l'élément de façade au boîtier sont dépourvus d'organe élastique sollicitant l'élément de façade en éloignement du boîtier ;
- l'élément de façade est un élément s'étendant verticalement par rapport au boîtier de l'appareil, la première extrémité étant une extrémité inférieure et la seconde extrémité étant une extrémité supérieure ;
- l'élément de façade est un élément s'étendant sur une fraction de la surface frontale de l'appareil ;
- le boîtier loge un premier ensemble électronique, l'élément de façade loge un second ensemble électronique relié à au moins un organe de commande et de contrôle apparent sur l'élément de façade, et l'appareil comprend en outre un connecteur électrique comportant des organes coopérants sur le boîtier et sur l'élément de façade, pour coupler ensemble les premier et second ensembles électroniques, de manière à ne rendre l'appareil fonctionnel que lorsque l'élément de façade est monté sur le boîtier ;
- l'appareil comprend en outre, au niveau de ladite première et/ou seconde paire d'éléments magnétiques, des moyens de guidage réciproque de l'élément de façade par rapport au boîtier, avec notamment un bossage formé sur l'élément de façade et emboîtable dans une forme en creux conjuguée formée dans le boîtier, ou *vice versa.*

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une vue perspective générale d'un appareil selon l'invention, avec la façade amovible montée sur le boîtier.
La Figure 2 est une vue perspective de ce même appareil, avec la façade amovible retirée.
La Figure 3 est une vue agrandie du détail repéré III sur la Figure 2.
La Figure 4 est une vue agrandie du détail repéré IV sur la Figure 2.
La Figure 5 est une vue perspective avant de la façade amovible, dissociée du boîtier de l'appareil.
La Figure 6 est une vue perspective arrière de la façade amovible de la
Figure 5.

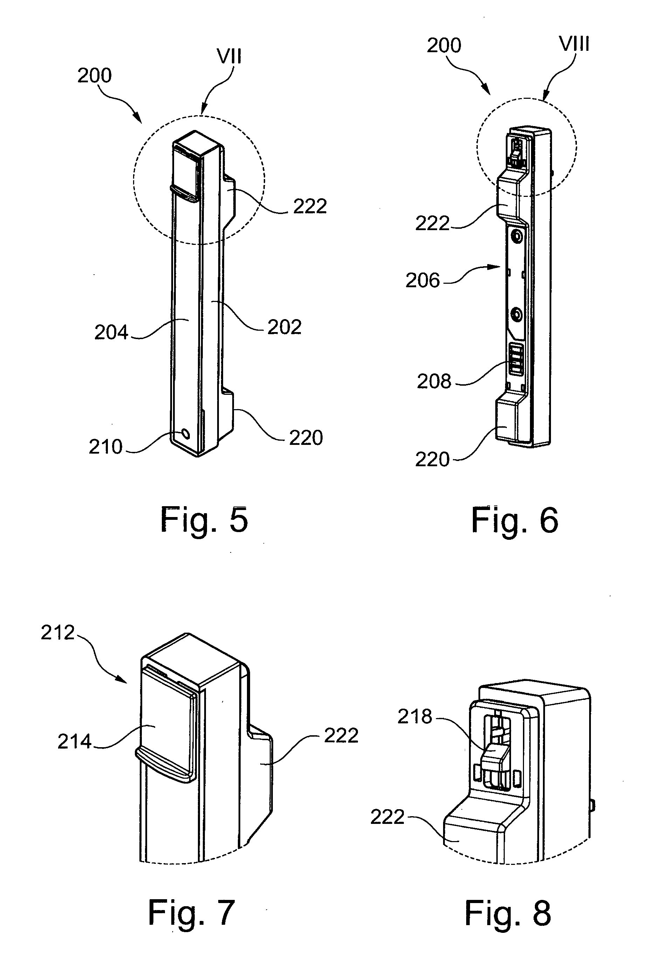

La Figure 7 est une vue agrandie du détail repéré VII sur la Figure 5.
La Figure 8 est une vue agrandie du détail repéré VIII sur la Figure 6.

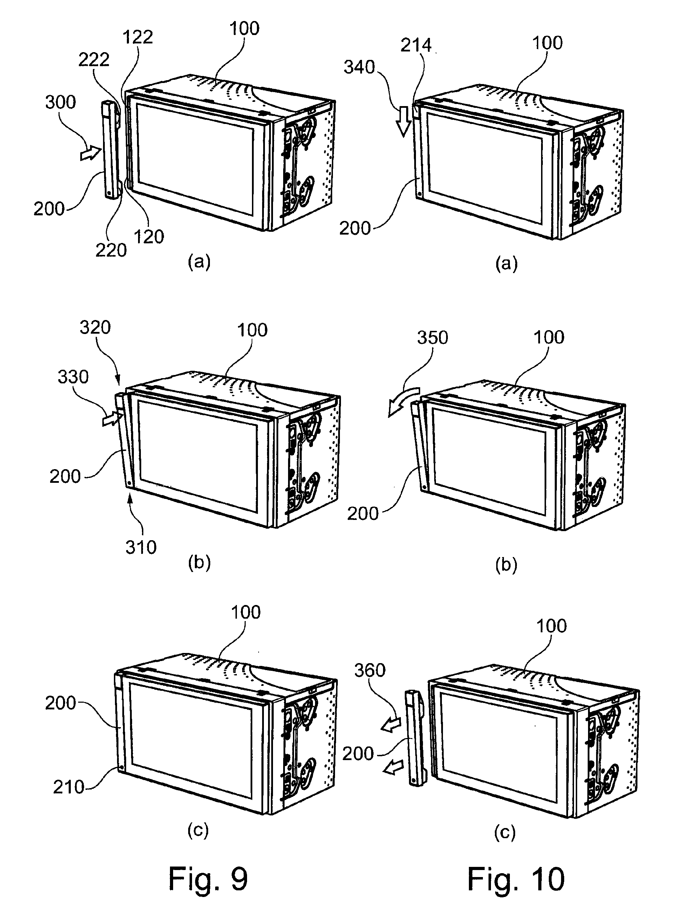

Les Figures 9a à 9c illustrent les étapes successives de la mise en place de la façade amovible sur le boîtier de l'appareil.
Les Figures 10a à 10c montrent les étapes successives du retrait de la façade amovible de l'appareil.

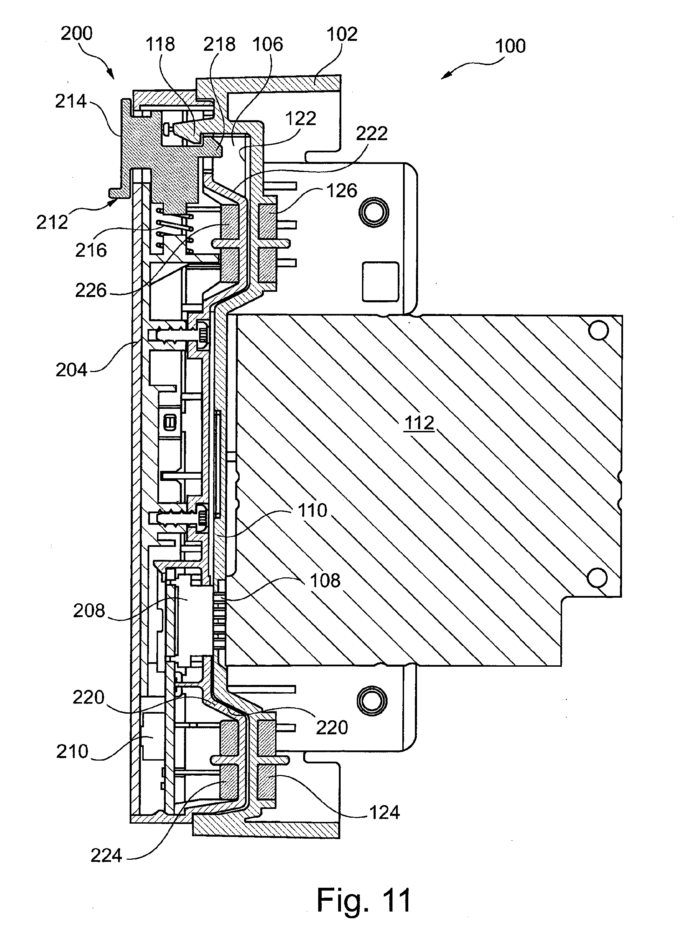

La Figure 11 est une coupe en élévation, suivant le plan médian de la façade amovible, de cette façade amovible montée sur le boîtier de l'appareil.

L'autoradio selon l'invention se présente par exemple, comme illustré sur les figures, sous la forme d'un bloc de dimensions normalisées intégrable dans la planche de bord d'un véhicule automobile. Il s'agit par exemple d'un bloc normalisé "double DIN" (en référence à la norme DIN 75490/ISO 7736), correspondant à une dimension d'ouverture du logement de la planche de bord de 180 x 100 mm.

L'invention s'applique avantageusement à un appareil multimédia de type autoradio intégrant des fonctions de téléphonie mains libres et des éléments de connectivité multimédia permettant le couplage à des baladeurs, cartes mémoire support de fichiers audio, couplage *Bluetooth* stéréo avec un dispositif distant sans fil, etc. ainsi que des fonctions GPS de géopositionnement par satellite.

Cet appareil comporte, comme illustré sur les figures, un boîtier 100 comprenant un coffret 102, enfermant les différents éléments électroniques et normalement intégré dans le tableau de bord du véhicule, avec en face frontale un élément de façade fixe 104, par exemple un afficheur/écran tactile de grande dimension permettant un contrôle aisé des différentes fonctions ainsi que l'affichage de listes, d'une cartographie GPS, etc.

Ce boîtier 100 reçoit une façade amovible 200 qui, dans l'exemple illustré, est une façade amovible de dimension réduite s'étendant sous forme d'un élément allongé vertical accolé latéralement à l'écran fixe 104 du boîtier 100.

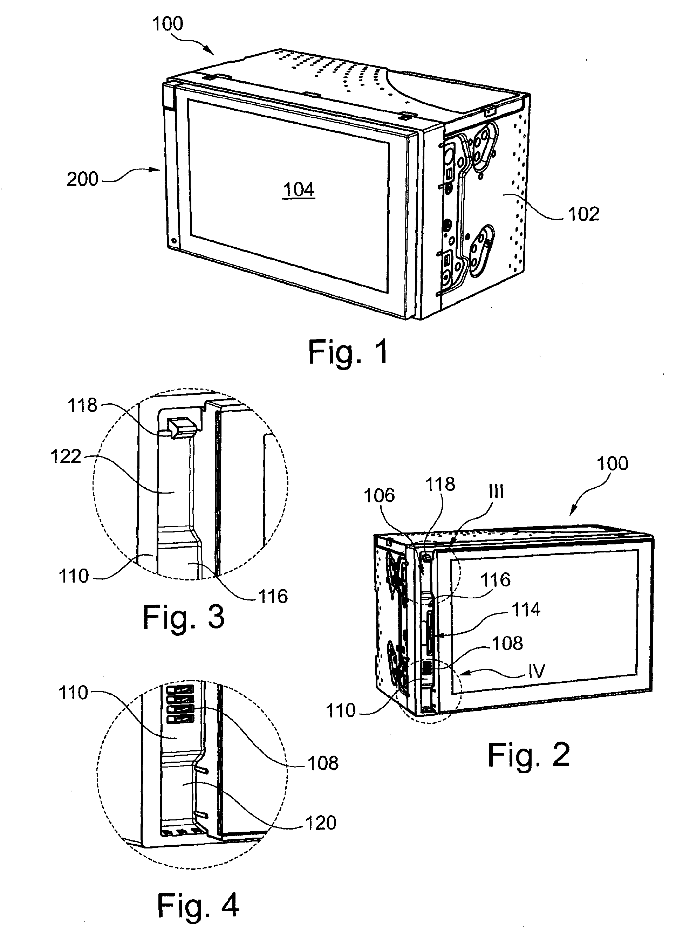

Comme illustré Figures 2 à 4, où le boîtier 100 a été représenté avec la façade amovible 200 retirée, le boîtier laisse apparaître dans la cavité 106 découverte par le retrait de la façade divers éléments fonctionnels tels que par exemple un connecteur électrique 108 traversant la paroi frontale 110 du boîtier et relié à un circuit électronique 112 (Figure 11) interne au boîtier.

La cavité 106 comporte également un logement d'insertion 114 pour une carte mémoire, par exemple de type *SD Card* servant de support de fichiers musicaux ou de données, notamment des données cartographiques utilisables avec un logiciel de navigation GPS. La paroi 110 de la cavité 106 porte également un bouton 116 de remise à zéro permettant de réinitialiser si besoin le logiciel interne de l'appareil.

Cette liste d'éléments fonctionnels n'est bien entendu pas limitative, et d'autres éléments peuvent être envisagés tels que : boutons de commande rarement utilisés (pour le paramétrage de certaines fonctions), fente d'insertion d'un lecteur de disque compact, trappe permettant de loger un baladeur, un téléphone portable ou un *smartphone,* etc.

Le boîtier porte également en partie supérieure un crochet fixe 118 permettant le verrouillage de la façade de la manière que l'on exposera plus bas, et la cavité 106 est configurée de manière à présenter en partie basse et en partie haute deux formes évidées 120 et 122 qui serviront au guidage de la façade lors de la mise en place de celle-ci, de la manière que l'on exposera également plus bas.

La façade amovible 200, représentée isolément sur les Figures 5 à 8 et en coupe sur la Figure 11, se présente sous la forme d'un barreau allongé sensiblement parallélépipédique, de même hauteur que l'écran frontal fixe 104 du boîtier, de manière à s'étendre, en hauteur, du bord inférieur jusqu'au bord supérieur de l'appareil. La façade 200 est réalisée sous forme d'un boîtier 202 avec une face frontale 204 et une face dorsale 206. La face dorsale porte un élément de connecteur 208 destiné à coopérer avec l'élément de connecteur 108 du boîtier 100 lorsque la façade est montée sur ce dernier. Cet élément de connecteur 208 est relié à des circuits internes de la façade 200, avec notamment un bouton "Marche/Arrêt" 210 présent sur la face frontale 204, pour permettre la mise en route de l'appareil par appui sur ce bouton après que la façade a été montée sur le boîtier. La façade peut également comprendre d'autres éléments tels que témoins lumineux, etc. contrôlés par des tensions et signaux appliqués par le boîtier via les éléments de connecteur 108 et 208.

La façade amovible 200 a un double rôle. D'une part elle occulte l'accès au logement de carte 114 et au bouton 116 de remise à zéro du système, et d'autre part elle rend l'appareil inopérant lorsque la façade est enlevée : les circuits électroniques du boîtier ne peuvent en effet être activés que par appui sur l'interrupteur 210, ce qui présuppose que la façade amovible 200 ait été emboîtée dans le logement 106 du boîtier 100 (fonction antivol).

En partie supérieure, la façade amovible 200 comporte un verrou mécanique 212, comprenant une tirette 214 mobile à l'encontre de la sollicitation d'un ressort 216 (Figure 11) afin de déplacer vers le bas un crochet mobile 218 apte à coopérer avec le crochet fixe 118 du boîtier pour assurer un un verrouillage positif mécanique entre façade et boîtier lorsque ces deux éléments sont réunis.

En variante, le système de fermeture purement mécanique avec les deux crochets coopérants 118, 218 peut être remplacé par un système fonctionnellement équivalent, par exemple une fermeture par électro-aimant, libérable par une commande électrique.

La façade amovible 200 comporte en outre, respectivement en partie basse et en partie haute, des bossages 220, 222 emboîtables dans les formes en creux homologues 120 et 122 du boîtier, pour assurer le guidage naturel de la façade amovible au moment où celle-ci est rapprochée du boîtier pour solidarisation à ce dernier.

En partie inférieure, au niveau du bossage 220 et de la forme en creux 120 la façade amovible et le boîtier sont, comme illustré Figure 11, couplés par une charnière magnétique comprenant deux aimants respectifs 224, 124 disposés en vis-à-vis en relation d'attraction mutuelle, c'est-à-dire avec les pôles contraires tournés l'un vers l'autre. Les aimants utilisés sont d'un type procurant une attraction suffisante même lorsqu'ils sont éloignés de quelques millimètres, par exemple des aimants au néodyme qui procurent une force d'attraction très élevée sous une très faible taille. Le couple d'aimants 124, 224 joue le rôle de deux points d'articulation pour le boîtier 100 et la façade 200, sans qu'il soit besoin d'ajouter aucune pièce de liaison mécanique, le couplage de la façade au boîtier à cet endroit (dans la région inférieure de la façade) ne résultant que de l'attraction mutuelle de la paire d'aimants en vis-à-vis.

En variante, la paire d'aimants 124, 224 peut être remplacée par un aimant unique, prévu dans le boîtier ou dans la façade, associé à un élément ferromagnétique passif prévu respectivement dans la façade ou dans le boîtier, par exemple une plaque en acier doux remplaçant l'un des aimants.

En partie supérieure de la façade et du boîtier, et de façon caractéristique de l'invention, il est également prévu une paire d'aimants 126, 226 disposés respectivement sur le boîtier 100 et sur la façade 200 en vis-à-vis, mais ici ces aimants sont en relation de répulsion mutuelle, c'est-à-dire que ce sont les pôles de même nom qui sont tournés l'un vers l'autre. Les aimants 126, 226, peuvent être, comme pour les aimants 124, 224, des aimants au néodyme qui procurent une force de répulsion élevée sous une faible taille.

On va maintenant exposer le principe de fonctionnement de l'invention, en référence aux Figures 9 (mise en place de la façade) et 10 (retrait de la façade amovible).

La configuration particulière que l'on a décrite plus haut, avec les deux aimants 124, 224 qui s'attirent et les deux aimants 126, 226 qui se repoussent, permet un enlèvement et une mise en place de la façade amovible sans guidage ni positionnement précis ; cette configuration permet également d'avoir une position intermédiaire stable de la façade lors des phases de mise en place ou de retrait.

Plus précisément, comme illustré Figure 9, pour mettre en place la façade amovible 200 sur le boîtier 100, la façade est approchée vers la zone d'emboîtage (Flèche 300, Figure 9a), avec les deux bossages 220, 222 tournés et approximativement orientés vers les formes en creux homologues 120 et 122 du boîtier.

Dès que la façade amovible est suffisamment proche de la zone d'emboîtage, se produisent alors simultanément les deux actions suivantes :
- la façade se met en position automatiquement grâce à la zone d'aimantation inférieure (attraction des aimants 124, 224 de la charnière magnétique en partie inférieure 310), et
- la façade reste légèrement inclinée par rapport au plan de la face frontale 104 du boîtier, du fait de la répulsion des deux aimants 126, 226 en partie supérieure 320. Les forces d'attraction/répulsion des différents aimants sont choisies en fonction de la masse de la façade amovible 200 pour que la position intermédiaire ainsi atteinte (Figure 9b) soit une position statique stable en l'absence de sollicitation extérieure.

L'étape suivante consiste à exercer un appui (Flèche 330) sur la partie supérieure 320 de la façade amovible 200, ce qui fait pivoter celle-ci dans son logement inférieur et la verrouille sur le boîtier de l'appareil.

La configuration finale est celle illustrée Figure 9c. La mise en route de l'appareil est alors possible en appuyant sur le bouton Marche/Arrêt 210. L'enlèvement de la façade se fait en procédant de la manière inverse, comme illustré Figure 10.

La première manoeuvre consiste (Flèche 340, Figure 10a) à abaisser la tirette coulissante 214, pour dégager le crochet mobile 218 de la façade du crochet fixe 118 du boîtier.

La façade s'éjecte alors automatiquement du fait de la répulsion des aimants 126, 226 en partie supérieure 320. La façade prend alors la position illustrée Figure 10b, c'est-à-dire une position légèrement inclinée en direction de l'utilisateur, cette position étant une position stable. La façade peut alors être facilement saisie par l'utilisateur par sa partie saillante, et retirée (Flèche 360, Figure 10c) pour l'enlever de son logement et rendre ainsi l'appareil non fonctionnel (ou bien dégager l'accès à la fente d'insertion de la carte).

Ainsi, le système de l'invention permet de réaliser une éjection de la façade amovible par un mouvement très simple de l'utilisateur, d'un seul doigt, et sans recours à un système mécanique tel que ressort ou lame d'éjection. Il est possible de mettre en place ou de récupérer très simplement la façade amovible, grâce à la position intermédiaire stable dans laquelle celle-ci, partiellement extraite, reste orientée vers l'utilisateur ce qui la rend très facile à saisir.

## Revendications

1. Un appareil électronique audio/vidéo, notamment un autoradio multimedia, comportant :
- un boîtier (100), notamment un boîtier intégrable dans un tableau de bord de véhicule automobile ;
- un élément de façade (200), monté de manière amovible sur le boîtier ; et
- des moyens d'assemblage et de fixation réversible de l'élément de façade sur le boîtier, comportant :
· à une première extrémité de l'élément de façade et du boîtier, une charnière magnétique démontable comprenant une première paire d'éléments magnétiques (124, 224), disposés respectivement sur le boîtier et sur l'élément de façade, en vis-à-vis et en relation d'attraction mutuelle ; et
· à une seconde extrémité, opposée, de l'élément de façade et du boîtier, des moyens de verrouillage de l'élément de façade au boîtier,
**caractérisé en ce que** les moyens de verrouillage de l'élément de façade au boîtier comprennent :
- un verrou (212) ; et
- une seconde paire d'éléments magnétiques (126, 226), disposés respectivement sur le boîtier et sur l'élément de façade, en vis-à-vis et en relation de répulsion mutuelle.

2. L'appareil de la revendication 1, dans lequel l'élément de façade est mobile par rapport au boîtier entre :
- une position fermée, où l'élément de façade est maintenu solidaire du boîtier par blocage du verrou ;
- une position entrouverte, où l'élément de façade est désolidarisé du boîtier au niveau du verrou après déblocage de celui-ci, mais reste couplé au boîtier au niveau de la charnière magnétique, les éléments magnétiques de la première paire étant accolés l'un à l'autre et les éléments magnétiques de la seconde paire étant à distance l'un de l'autre ; et
- une position de retrait de l'élément de façade, où celui-ci est entièrement désolidarisé et découplé du boîtier à la fois au niveau du verrou et au niveau de la charnière magnétique.

3. L'appareil de la revendication 2, dans lequel la force d'attraction des éléments magnétiques de la première paire, la force de répulsion des éléments magnétiques de la seconde paire, ainsi que la masse et la disposition de l'élément de façade sont choisis de manière que la position entrouverte soit une position statique stable en l'absence de sollicitation extérieure.

4. L'appareil de la revendication 1, dans lequel le verrou (212) est un verrou mécanique (214, 216, 218).

5. L'appareil de la revendication 1, dans lequel les moyens de verrouillage de l'élément de façade au boîtier sont dépourvus d'organe élastique sollicitant l'élément de façade en éloignement du boîtier.

6. L'appareil de la revendication 1, dans lequel l'élément de façade est un élément s'étendant verticalement par rapport au boîtier de l'appareil, et dans lequel ladite première extrémité est une extrémité inférieure et ladite seconde extrémité est une extrémité supérieure.

7. L'appareil de la revendication 1, dans lequel l'élément de façade est un élément s'étendant sur une fraction de la surface frontale de l'appareil.

8. L'appareil de la revendication 1, dans lequel :
- le boîtier loge un premier ensemble électronique (112),
- l'élément de façade loge un second ensemble électronique relié à au moins un organe de commande et de contrôle (210) apparent sur l'élément de façade, et
- l'appareil comprend en outre un connecteur électrique comportant des organes coopérants (108, 208) sur le boîtier et sur l'élément de façade, pour coupler ensemble lesdits premier et second ensembles électroniques, de manière à ne rendre l'appareil fonctionnel que lorsque l'élément de façade est monté sur le boîtier.

9. L'appareil de la revendication 1, comprenant en outre, au niveau de ladite première et/ou seconde paire d'éléments magnétiques, des moyens (120, 220 ; 122 ; 222) de guidage réciproque de l'élément de façade par rapport au boîtier.

10. L'appareil de la revendication 9, dans lequel les moyens de guidage réciproque comprennent un bossage (220 ; 222) formé sur l'élément de façade et emboîtable dans une forme en creux conjuguée (120 ; 122) formée dans le boîtier, ou *vice versa.*

## Patentansprüche

1. Elektronisches Audio-/Videogerät, insbesondere ein Multimedia-Autoradio, das Folgendes aufweist:
- ein Gehäuse (100), insbesondere ein Gehäuse, das in ein Armaturenbrett eines Kraftfahrzeugs integrierbar ist;
- ein Bedienkonsolenelement (200), das auf abnehmbare Art und Weise auf dem Gehäuse angebracht ist; und
- Mittel zum Zusammenbau und zur reversiblen Befestigung des Bedienkonsolenelements auf dem Gehäuse, die Folgendes aufweisen:
• an einem ersten Ende des Bedienkonsolenelements und des Gehäuses, ein abnehmbares magnetisches Scharnier, das ein erstes Paar magnetischer Elemente (124, 224) aufweist, die auf dem Gehäuse beziehungsweise auf dem Bedienkonsolenelement einander gegenüberliegend und in einer Beziehung gegenseitiger Anziehung angeordnet sind; und
• an einem zweiten, entgegengesetzten Ende des Bedienkonsolenelements und des Gehäuses, Mittel zur Verriegelung des Bedienkonsolenelements an dem Gehäuse,
**dadurch gekennzeichnet, dass** die Mittel zur Verriegelung des Bedienkonsolenelements an dem Gehäuse Folgendes aufweisen:
- einen Riegel (212); und
- ein zweites Paar von Magnetelementen (126, 226), die auf dem Gehäuse beziehungsweise auf dem Bedienkonsolenelement einander gegenüberliegend und in einer Beziehung gegenseitiger Abstoßung angeordnet sind.

2. Gerät nach Anspruch 1, wobei das Bedienkonsolenelement in Bezug zum Gehäuse beweglich ist zwischen:
- einer geschlossenen Stellung, in der das Bedienkonsolenelement durch Sperren des Riegels fest mit dem Gehäuse verbunden gehalten wird;
- einer halboffenen Stellung, in der das Bedienkonsolenelement vom Gehäuse im Bereich des Riegels nach dessen Entsperren getrennt ist, aber im Bereich des magnetischen Scharniers an das Gehäuse gekoppelt bleibt, wobei die magnetischen Elemente des ersten Paares aneinandergefügt sind und die magnetischen Elemente des zweiten Paares sich in einem Abstand voneinander befinden; und
- einer entfernten Stellung des Bedienkonsolenelements, in der dieses vollständig sowohl im Bereich des Riegels als auch im Bereich des magnetischen Scharniers von dem Gehäuse getrennt und abgekoppelt ist.

3. Gerät nach Anspruch 2, wobei die Anziehungskraft der magnetischen Elemente des ersten Paares, die Abstoßungskraft der magnetischen Elemente des zweiten Paares, sowie die Masse und die Anordnung des Bedienkonsolenelements derart ausgewählt sind, dass die halboffene Stellung bei Nichtvorhandensein einer äußeren Beanspruchung eine stabile statische Stellung ist.

4. Gerät nach Anspruch 1, wobei der Riegel (212) ein mechanischer Riegel (214, 216, 218) ist.

5. Gerät nach Anspruch 1, wobei die Mittel zur Verriegelung des Bedienkonsolenelements am Gehäuse kein elastisches Organ aufweisen, das das Bedienkonsolenelement in die Entfernung von dem Gehäuse beansprucht.

6. Gerät nach Anspruch 1, wobei das Bedienkonsolenelement ein Element ist, das sich vertikal zum Gehäuse des Geräts erstreckt, und wobei das erste Ende ein unteres Ende ist und das zweite Ende ein oberes Ende ist.

7. Gerät nach Anspruch 1, wobei das Bedienkonsolenelement ein Element ist, das sich über einen Bruchteil der Vorderfläche des Geräts erstreckt.

8. Gerät nach Anspruch 1, wobei:
- das Gehäuse eine erste elektronische Baugruppe (112) aufnimmt,
- das Bedienkonsolenelement eine zweite elektronische Baugruppe aufnimmt, die mit mindestens einem sichtbaren Bedienungs- und Steuerungsorgan (210) auf dem Bedienkonsolenelement verbunden ist, und
- das Gerät ferner einen elektrischen Verbinder aufweist, der zusammenwirkende Organe (108, 208) auf dem Gehäuse und auf dem Bedienkonsolenelement aufweist, um die erste und die zweite elektronische Baugruppe zusammenzukoppeln, derart, dass das Gerät lediglich funktionsfähig wird, wenn das Bedienkonsolenelement auf dem Gehäuse angebracht ist.

9. Gerät nach Anspruch 1, das ferner im Bereich des ersten und/oder zweiten Paares von magnetischen Elementen Mittel (120, 220; 122; 222) zur gegenseitigen Führung des Bedienkonsolenelements in Bezug zum Gehäuse aufweist.

10. Gerät nach Anspruch 9, wobei die Mittel zur gegenseitigen Führung eine Erhebung (220; 222) aufweisen, die auf dem Bedienkonsolenelement gebildet ist und in eine zugehörige hohle Form (120; 122) eingefügt werden kann, die in dem Gehäuse gebildet ist, oder umgekehrt.

## Claims

1. An audio/video electronic device, in particular a multimedia car radio, including:
- a casing (100), in particular a casing integratable into the dashboard of a motor vehicle;
- a front element (200), removably mounted on the casing; and
- means for assembly and reversible fixation of the front element to the casing, including:
. at a first end of the front element and of the casing, a demountable magnetic hinge comprising a first pair of magnetic elements (124, 224), arranged on the casing and on the front element, respectively, opposite to each other and in relation of mutual attraction; and
. at a second, opposite, end of the front element and of the casing, means for locking the front element to the casing,
**characterized in that** the means for locking the front element to the casing comprise:
- a lock (212); and
- a second pair of magnetic elements (126, 226), arranged on the casing and on the front element, respectively, opposite to each other and in relation of mutual repulsion.

2. The device of claim 1, wherein the front element is mobile with respect to the casing between:
- a closed position, where the front element is held attached to the casing by locking of the lock;
- a half-open position, where the front element is detached from the casing at the lock, after unlocking of the latter, but remains coupled to the casing at the magnetic hinge, the magnetic elements of the first pair being placed side by side and the magnetic elements of the second pair being remote from each other; and
- a position of removal of the front element, where the latter is fully detached and decoupled from the casing, both at the lock and at the magnetic hinge.

3. The device of claim 2, wherein the attraction force of the magnetic elements of the first pair, the repulsion force of the magnetic elements of the second pair, as well as the mass and the placement of the front element are chosen so that the half-open position is a stable static position in the absence of external stress.

4. The device of claim 1, wherein the lock (212) is a mechanical lock (214, 216, 218).

5. The device of claim 1, wherein the means for locking the front element to the casing are devoid of elastic member stressing the front element away from the casing.

6. The device of claim 1, wherein the front element is an element extending vertically with respect to the casing of the device, and wherein said first end is a lower end and said second end is an upper end.

7. The device of claim 1, wherein the front element is an element extending over a fraction of the front surface of the device.

8. The device of claim 1, wherein:
- the casing accommodates a first electronic unit (112),
- the front element accommodates a second electronic unit connected to at least one control and regulation member (210) appearing on the front element, and
- the device further comprises an electric connector including cooperating members (108, 208) on the casing and the front element, to couple together said first and second electronic units, so that the device is made operative only when the front element is mounted on the casing.

9. The device of claim 1, further comprising, at said first and/or second pair of magnetic elements, means (120, 220; 122; 222) for the reciprocal guiding of the front element with respect to the casing.

10. The device of claim 9, wherein the reciprocal guiding means comprise an embossment (220; 222) formed on the front element and fittable into a conjugated hollow shape (120; 122) formed in the casing, or *vice versa.*
